# EUROPEAN PATENT APPLICATION

(11) **EP 4 704 306 A1**
(43) Date of publication of application: **04.03.2026**
(21) Application number: 24196869.2
(22) Date of filing: 28.08.2024
(51) Int. Cl.: H02J 50/80, H04B 5/79

(54) **WIRELESS POWER TRANSFER**

(71) Applicant: Koninklijke Philips N.V., 5656 AG Eindhoven (NL)
(72) Inventor: DRAAK, Johannes Wilhelmus, 5656 AG Eindhoven (NL); LEBENS, Pascal Leonard Maria Theodoor, 5656 AG Eindhoven (NL)
(74) Representative: Philips Intellectual Property & Standards

(57) **Abstract**

A power transmitter (101) provides wireless power to a power receiver (105). The power transmitter (101) comprises a transmitter coil (103) generating a power transfer signal. A communicator (307) is arranged to communicate using a communication carrier and an object detector (is arranged to detect objects. An update circuit (315) receives (701) a power receiver identity modulated on communication carrier by a power receiver in response a detection of the power receiver. The identity is stored and transmitted to an update device by modulation of the communication carrier when the update device is detected. Update data modulated on the communication carrier by the update device is received and stored with a link to the identity. When a power receiver is subsequently detected, a new identity is received (711) and update data linked to this identity is retrieved (713). The retrieved update data is then transmitted to the power receiver which may then perform an update using the update data.

## Description

### FIELD OF THE INVENTION

The invention relates to wireless power transfer and in particular, but not exclusively, to update functionality in a wireless power transfer system providing inductive power transfer to high power devices, such as e.g. kitchen appliances.

### BACKGROUND OF THE INVENTION

Most present-day electrical products require a dedicated electrical contact in order to be powered from an external power supply. However, this tends to be impractical and requires the user to physically insert connectors or otherwise establish a physical electrical contact. Typically, power requirements also differ significantly, and currently most devices are provided with their own dedicated power supply resulting in a typical user having a large number of different power supplies with each power supply being dedicated to a specific device. Although, the use of internal batteries may avoid the need for a wired connection to a power supply during use, this only provides a partial solution as the batteries will need recharging (or replacing). The use of batteries may also add substantially to the weight and potentially cost and size of the devices.

In order to provide a significantly improved user experience, it has been proposed to use a wireless power supply wherein power is inductively transferred from a transmitter inductor in a power transmitter device to a receiver coil in the individual devices.

Power transmission via magnetic induction is a well-known concept, mostly applied in transformers having a tight coupling between a primary transmitter inductor/coil and a secondary receiver coil. By separating the primary transmitter coil and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter coil in order to be recharged or powered externally. For example, power transmitter devices may be arranged with a horizontal surface on which a device can simply be placed in order to be powered.

Furthermore, such wireless power transfer arrangements may advantageously be designed such that the power transmitter device can be used with a range of power receiver devices. In particular, a wireless power transfer approach, known as the Qi Specifications, has been defined and is currently being further developed. This approach allows power transmitter devices that meet the Qi Specifications to be used with power receiver devices that also meet the Qi Specifications without these having to be from the same manufacturer or having to be dedicated to each other. The Qi standard further includes some functionality for allowing the operation to be adapted to the specific power receiver device (e.g. dependent on the specific power drain).

The Qi Specification is developed by the Wireless Power Consortium and more information can be found on their website: http://www.wirelesspowerconsortium.com/index.html, where in particular the defined Specification documents can be found.

The Wireless Power Consortium has on the basis of the Qi Specification proceeded to develop the Ki Specification (also known as the Cordless Kitchen Specification) which is aimed at providing safe, reliable, and efficient wireless power transfer to kitchen appliances. Ki supports much higher power levels up to 2.2kW.

Although such wireless power transfer approaches and devices operate in accordance with a well-defined standard, the desired functionality of the power receivers and/or power transmitters is likely to change with time. For example, the Standards are likely to be further developed and possibly expanded to provide for additional functionality or services. Further, new proprietary and non-standardized functionality and services may be introduced and be desired for existing and deployed devices.

For example, like many other contemporary technologies, Ki cordless kitchen allows intelligent functions implemented in both the wireless power transmitter (e.g. cooktop) and the wireless power receiver (e.g. appliance). An example of such an intelligent function is authentication when either the power transmitter or the power receiver or both of them are required to be authenticated by exchange of cryptographic certificates. Another example of such a smart function is smart cooking when the appliance uploads a set of instructions defined by the recipe to the power transmitter and leaves the control over the cooking to the power transmitter.

It is expected that the amount and content of such smart functions will increase substantially, and later revisions of the Specifications are expected to implement a more versatile set of auxiliary functions than implemented in the original release. However, the implementation of such smart functions is often proprietary and therefore it tends to be difficult to introduce new smart functions to existing deployed systems. For example, smart functions may be dependent on a common hardware-software interface which however is under the control of the proprietary manufacturer.

It is desirable to be able to update performance and operations of a wireless power transfer system to accommodate for changes in the operation or context of the system. For example, additional constraints or requirements may be imposed in order to e.g. increase security, reliability, and/or safety of the operation.

Accordingly, the ability to update elements of a wireless power transfer system is important for many practical applications. It is desired that such updating is e.g. reliable, user friendly, safe, secure, easy to implement, and practical.

In particular updating of power receiver devices in a deployed wireless power transfer system may often be difficult to achieve in an efficient and user friendly manner. It is difficult to provide update functionality that is both flexible and can adapt to many different types of power receiver devices and without adding substantial complexity and cost. This is particularly problematic for many power receiver devices which are designed to be low cost devices.

Typically updating of devices is performed via an Internet connection and some wireless power devices may be arranged to perform an update by accessing central servers and retrieving suitable data therefrom. However, in many wireless power transfer applications and systems, it is not practical, or even possible, for all devices to have Internet access or access to such a central server. Requiring power receiver devices to include full communication functionality, such as wireless and/or Internet communication functionality, will often result in an unacceptable cost and complexity increase. For example, many Ki power receiver devices and appliances include only NFC communication functionality for communicating with the power transmitter and do not for cost and complexity reasons have any other communication options.

Accordingly, an improved power transfer approach/system would be advantageous and, in particular, an approach allowing improved update functionality/options including e.g. improved reliability, user friendliness, safety, security, facilitated implementation, practicality, reduced cost, reduced complexity, improved operation, improved update functions and/or processes, and/or improved performance would be advantageous.

### SUMMARY OF THE INVENTION

Accordingly, the Invention seeks to preferably mitigate, alleviate or eliminate one or more of the above mentioned disadvantages singly or in any combination.

According to an aspect of the invention, there is provided a power transmitter for wirelessly providing power to a power receiver via an electromagnetic power transfer signal when in a power transfer phase; the power transmitter comprising: a transmitter coil arranged to generate a power transfer signal in response to a drive signal; a driver arranged to generate a drive signal for the transmitter coil to generate the electromagnetic power transfer signal when in the power transfer phase; a communicator arranged to communicate with the power receiver, the communicator being arranged to perform bidirectional communication using a communication carrier, the communicator being arranged to transmit data by modulating the communication carrier and receiving data by demodulating a modulation of the communication carrier; an object detector arranged to perform object detection when the power transmitter is in an idle phase; an update circuit arranged to perform the steps of: receiving a first power receiver identity indication modulate on communication carrier by a first (candidate) power receiver in response to the object detector detecting a presence of the first (candidate) power receiver; storing the first power receiver identity indication; transmitting the first power receiver identity indication to an update device by modulation of the communication carrier in response to a detection by the object detector that the first power receiver has been replaced by the update device; receiving update data modulated on the communication carrier by the update device; storing the update data and a link between the update data and the first power receiver identity; receiving a second power receiver identity indication modulated on the communication carrier by a second (candidate) power receiver in response to a detection by the object detector that the update device has been replaced by the second (candidate) power receiver; and retrieving the update data and transmitting it to the second (candidate) power receiver by modulation of the communication carrier in response to the first power receiver identity and the second power receiver identity meeting a match criterion.

The approach may allow an improved and/or user friendly update process for wireless power transfer receivers. The approach may allow efficient updating without requiring that the power transmitter or the power receiver connects to e.g. a remote server or a network, e.g. such as specifically the Internet. The approach may allow updating of wireless power transfer receivers without requiring any additional or dedicated communication functionality. Rather, efficient updating of devices can be achieved using power transfer functionality, and specifically power transfer communication functionality. The approach may for example allow dedicated update devices, such as e.g. Smart Cards, to be used for distributing update data that allows efficient updating of deployed devices while maintaining a low complexity (and typically cost) of the power transmitter. The approach may reduce the functionality required for updating the power receivers of the wireless power transfer system.

The approach may for example be highly suitable for many wireless power transfer transmitter appliances, such as for example for kitchen applications, where no general communication functionality is implemented. In such cases, updating may simply be achieved by a manufacturer or provider distributing a Smart Card or similar physical device that may simply be placed in the operating volume of the power transmitter resulting in an automatic update.

The approach may provide a particularly efficient and/or user friendly updating of power receivers in a wireless power transfer system without requiring any dedicated communication functionality of power receivers to use any other communication means than those used for power transfer operations. The approach may allow update data for power receivers to be flexibly and efficiently distributed to different power receivers in an ad-hoc manner.

The power receiver identity indication may identify a unique power receiver or may e.g. identify a type, manufacturer, etc. of power receivers. The power receiver identification indications may be unique power receiver identifications or may be group power receiver identifications.

For transmission of data from the power transmitter, the modulation of communication carrier may be by amplitude, frequency, or phase modulation. For receiving data, the power transmitter may perform demodulation of load modulation of the communication carrier. The communication carrier may be used to form a communication channel as a (bidirectional) point to point communication channel.

The power transmitter and power receiver may communicate power transfer messages by modulation of the communication carrier. The power transmitter may during a power transfer phase receive power control messages load modulated onto the communication carrier.

According to an optional feature of the invention, the power transmitter comprises a user interface and the wherein the update circuit is arranged to transmit the update data to the second power receiver conditionally on the user interface receiving a confirmation user input.

According to an optional feature of the invention, the update circuit is arranged to determine a signature for the update data, and to only transmit the update data to the second power receiver if the signature meets a criterion.

This may provide improved and/or facilitated operation and/or implementation in many scenarios. The approach may provide a particularly efficient and/or user friendly updating of power receivers in a wireless power transfer system without requiring any dedicated communication functionality of power receivers to use any other communication means than those used for power transfer operations.

The signature may be a watermark, hash, and/or an encrypted identity.

According to an optional feature of the invention, the update circuit is further arranged to perform the steps of: transmitting the first power receiver identity indication to a further update device by modulation of the communication carrier in response to a detection by the object detector that the update device has been replaced by the further update device; receiving further update data modulated on the communication carrier by the further update device; receiving a third power receiver identity indication modulated on the communication carrier by a third (candidate) power receiver in response to a detection by the object detector that the further update device has been replaced by the third (candidate) power receiver; and transmitting the further update data to the third (candidate) power receiver by modulation of the communication carrier in response to the first power receiver identity and the third power receiver identity meeting a match criterion.

This may provide improved and/or facilitated operation and/or implementation in many scenarios. The approach may provide a particularly efficient and/or user friendly updating of power receivers in a wireless power transfer system without requiring any dedicated communication functionality of power receivers to use any other communication means than those used for power transfer operations. The feature may in particular facilitate and/or enable the distribution of update data files/packages of a large size.

According to an optional feature of the invention, the update data comprises at least one of: authentication data; and power receiver firmware update data.

According to an optional feature of the invention, the communicator is arranged to communicate with the power receiver, using Near Field Communication, NFC.

This may provide improved and/or facilitated operation and/or implementation in many scenarios.

According to an optional feature of the invention, the power receiver identification indication may be communicated in an NFC Data Exchange Format, NDEF, message of a Near Field Communication, NFC, protocol used by the communicator.

This may provide improved and/or facilitated operation and/or implementation in many scenarios.

According to an aspect/feature of the invention, there is provided a wireless power transfer system comprising the power transmitter as described above and further comprising the update device, the update device comprising: a first communication circuit arranged to bidirectionally communicate data with the power transmitter by modulation of the communication carrier; an update controller arranged to retrieve first update data linked with the first (candidate) power receiver identity indication; and wherein the first communication circuit is arranged to transmit the first update data to the power transmitter by modulation of the communication carrier.

According to an aspect of the invention, there is provided wireless power transfer system as described further comprises a store/memory/storage arranged to store a set of at least one update data package each linked with a power receiver identity indication; and wherein the update processor is arranged to retrieve the first update data from the store as an update data package linked with the first power receiver identity indication.

This may provide improved and/or facilitated operation and/or implementation in many scenarios. The approach may provide a particularly efficient and/or user friendly updating of power receivers in a wireless power transfer system without requiring any dedicated communication functionality of power receivers to use any other communication means than those used for power transfer operations.

According to an optional feature of the invention, the wireless power transfer system further comprises a second communication circuit arranged to communicate with a remote update server over a communication link not using the communication carrier; the second communication circuit further being arranged to send a request for update data for the first power receiver identity indication to the remote update server and to receive the first update data from the remote update server.

This may provide improved and/or facilitated operation and/or implementation in many scenarios. The approach may provide a particularly efficient and/or user friendly updating of power receivers in a wireless power transfer system without requiring any dedicated communication functionality of power receivers to use any other communication means than those used for power transfer operations.

According to an optional feature of the invention, the communication link includes at least one Internet communication link.

According to an optional feature of the invention, the update device comprises a user interface and the update processor is arranged to transmit the first update data to the power transmitter only if a confirmation user input is received by the user interface.

This may provide a particularly user friendly and advantageous operation.

According to an optional feature of the invention, the wireless power transfer system further comprises the power receiver, the power receiver comprising a communication circuit arranged to bidirectionally communicate with the power transmitter by modulation of the communication carrier; and an update circuit arranged to control the communication circuit to transmit a power receiver identity indication for the power receiver in response to a detection of the communication carrier; the update circuit further being arranged to control the communication circuit to receive the update data and to perform an update process/operation using the update data.

This may provide improved and/or facilitated operation and/or implementation in many scenarios. The approach may provide a particularly efficient and/or user friendly updating of power receivers in a wireless power transfer system without requiring any dedicated communication functionality of power receivers to use any other communication means than those used for power transfer operations.

The update process/operation may be a device update operation/ a power receiver update operation/ a power transmitter update operation. The update operation/process may be a modification, deletion, or addition of a function and/or operation performed by the power transmitter and/or a power receiver.

According to an optional feature of the invention, the update device comprises a user interface and the update circuit is arranged to transmit the power receiver identity indication conditionally on the user interface receiving a confirmation user input.

This may provide a particularly user friendly and advantageous operation.

According to an aspect of the invention, there is provided a method of operation for a power transmitter for wirelessly providing power to a power receiver via an electromagnetic power transfer signal when in a power transfer phase; the power transmitter comprising: a transmitter coil arranged to generate a power transfer signal in response to a drive signal; a driver arranged to generate a drive signal for the transmitter coil to generate the electromagnetic power transfer signal when in the power transfer phase; a communicator arranged to communicate with the power receiver, the communicator being arranged to perform bidirectional communication using a communication carrier, the communicator being arranged to transmit data by modulating the communication carrier and receiving data by demodulating a modulation of the communication carrier; an object detector arranged to perform object detection when the power transmitter is in an idle phase; and the method comprises the steps of: receiving a first power receiver identity indication modulate on communication carrier by a first (candidate) power receiver in response to the object detector detecting a presence of the first (candidate) power receiver; storing the first power receiver identity indication; transmitting the first power receiver identity indication to an update device by modulation of the communication carrier in response to a detection by the object detector that the first power receiver has been replaced by the update device; receiving update data modulated on the communication carrier by the update device; storing the update data and a link between the update data and the first power receiver identity; receiving a second power receiver identity indication modulated on the communication carrier by a second (candidate) power receiver in response to a detection by the object detector that the update device has been replaced by the second (candidate) power receiver; and retrieving the update data and transmitting it to the second (candidate) power receiver by modulation of the communication carrier in response to the first power receiver identity and the second power receiver identity meeting a match criterion.

According to an aspect/feature of the invention, there is provided a method of operation for a wireless power transfer system comprising the method of claim 14 and further comprising: the update device bidirectionally communicating data with the power transmitter by modulation of the communication carrier; the update device retrieving first update data linked with the first (candidate) power receiver identity indication; and the update data transmitting the first update data to the power transmitter by modulation of the communication carrier.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which:
FIG. 1 illustrates an example of elements of a power transfer system in accordance with some embodiments of the invention;
FIG. 2 illustrates an example of an electrical equivalence diagram for the power transfer function;
FIG. 3 illustrates an example of elements of a power transmitter in accordance with some embodiments of the invention;
FIG. 4 illustrates an example of a half bridge inverter for a power transmitter;
FIG. 5 illustrates an example of a full bridge inverter for a power transmitter;
FIG. 6 illustrates an example of elements of a power receiver in accordance with some embodiments of the invention;
FIG. 7 illustrates an example of elements of a method of operation for a power transmitter in accordance with some embodiments of the invention; and
FIG. 8 illustrates an example of elements of an update device in accordance with some embodiments of the invention.

### DETAILED DESCRIPTION OF THE EMBODIMENTS

The following description focuses on embodiments of the invention applicable to a wireless power transfer system utilizing a power transfer approach such as is known from the Qi Specification or the Ki Specification. However, it will be appreciated that the invention is not limited to this application but may be applied to many other wireless power transfer systems.

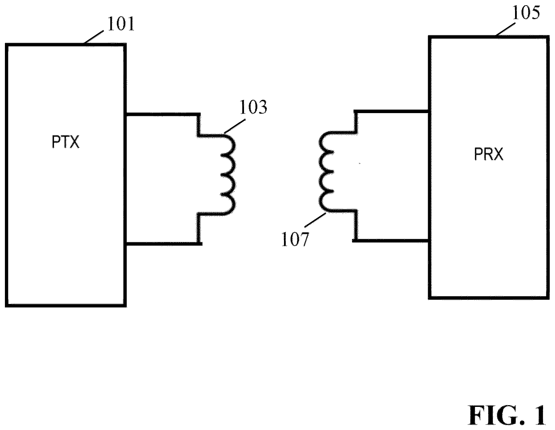

FIG. 1 illustrates an example of a power transfer system in accordance with some embodiments of the invention. The power transfer system comprises a power transmitter 101 which includes (or is coupled to) a transmitter coil / inductor 103. The system further comprises a power receiver 105 which includes (or is coupled to) a receiver coil/ inductor 107.

The system provides an inductive electromagnetic power transfer signal which may inductively transfer power from the power transmitter 101 to the power receiver 105. Specifically, the power transmitter 101 generates an electromagnetic signal, which is propagated as a magnetic flux by the transmitter coil or inductor 103. During power transfer, the electromagnetic signal transfers power to the power receiver 105 (and specifically to the receiver coil 107) and it will in the following be referred to as the power transfer signal.

The power transfer signal may typically have a frequency between around 20 kHz to around 1 MHz, and often for Qi compatible systems typically in the range from 95 kHz to 400 kHz or for Ki compatible systems typically in the range between 20kHz to 80kHz. The transmitter coil 103 and the power receiving coil 107 are loosely coupled and thus the power receiving coil 107 picks up (at least part of) the power transfer signal from the power transmitter 101. Thus, the power is transferred from the power transmitter 101 to the power receiver 105 via a wireless inductive coupling from the transmitter coil 103 to the power receiving coil 107. The term power transfer signal is mainly used to refer to the inductive signal! magnetic field between the transmitter coil 103 and the power receiving coil 107 (the magnetic flux signal), but it will be appreciated that by equivalence it may also be considered and used as a reference to an electrical signal provided to the transmitter coil 103 or picked up by the power receiving coil 107.

In the example, the power receiver 105 is specifically a power receiver that receives power via the receiver coil 107. However, in other embodiments, the power receiver 105 may comprise a metallic element, such as a metallic heating element, in which case the power transfer signal directly induces eddy currents resulting in a direct heating of the element.

The system is arranged to transfer substantial power levels, and specifically the power transmitter may support power levels in excess of 500mW, 1W, 5W, 50W, 100W or 500W in many embodiments. For example, for Qi corresponding applications, the power transfers may typically be in the 1-5W power range for low power applications (the basic power profile), up to 15W for Qi specification version 1.3, 2.0, 2.1, Up to 25W for Qi specification version 2.2. Power transfer levels may even by, in the range up to 100W for higher power applications such as power tools, laptops, drones, robots etc., and in excess of 100 W and up to more than 2000W for very high power applications, such as e.g. for Ki kitchen applications.

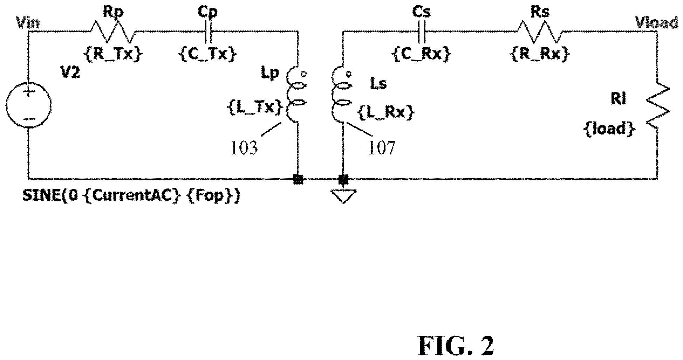

An example of an electrical equivalence diagram for the power transfer function of the power transmitter 101 and the power receiver 105 is illustrated in FIG. 2. A wide range of power transmitters and power receivers may exist in a given system, and these may have substantially different properties and parameters. For example, the coil sizes, induction values, and loads may vary substantially. Accordingly, the system parameters, as specifically represented in FIG. 2, may in practice vary significantly between different devices, mechanical constructions, positioning etc. In particular, the placement of the power receiver, and thus the relative positions of the receiver coil 107 and the transmitter coil 103, substantially affect the coupling between the coils, i.e. the primary (power transmitter side) inductor Lp and the secondary (power transmitter side) inductor Ls, and thus may significantly change the system behavior.

In the following, the operation of the power transmitter 101 and the power receiver 105 will be described with specific reference to an embodiment generally in accordance with the Qi or Ki Specifications (except for the herein described (or consequential) modifications and enhancements).

Many wireless power transfer systems utilize resonant power transfer where the transmitter coil 103 is part of a resonance circuit and typically the receiver coil 107 is also part of a resonance circuit. In many embodiments, the resonance circuits may be series resonance circuits and thus the transmitter coil 103 and the receiver coil 107 may be coupled in series with a corresponding resonance capacitor. The use of resonance circuits tends to provide a more efficient power transfer.

In most power transfer systems, before power transfer is initiated, a communication channel between the power transmitter 101 and the power receiver 105 is established. When the communication has been set up and identification of the two devices has been achieved, the power transmitter 101 may start power transmission to the power receiver 105.

Normally, a wireless power transfer system employs a power control loop in order to steer the system towards the appropriate operating point. This power control loop changes the amount of power that is transmitted from the power transmitter to the power receiver. The received power (or voltage or current) can be measured and together with the setpoint power value, an error signal can be generated. The power receiver sends this error signal (or another control value such as a desired power setpoint) to the power control function in the power transmitter to reduce the static error, ideally to zero.

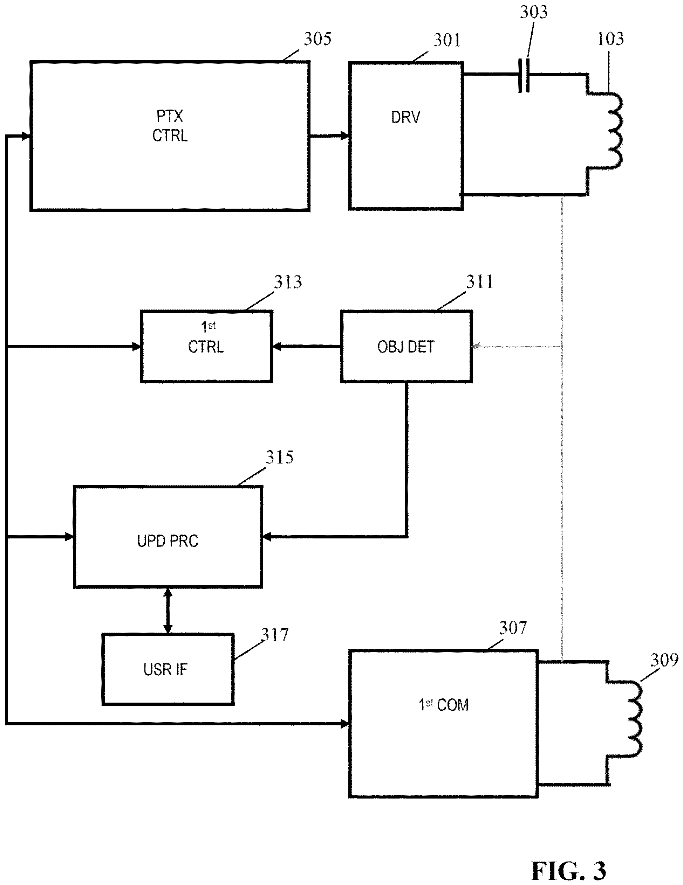

FIG. 3 illustrates exemplary elements of the power transmitter 101 of FIG. 1 in more detail.

The power transmitter 101 includes a driver 301 which can generate a drive signal that is fed to the transmitter coil 103 which in return generates the electromagnetic power transfer signal thereby providing a power transfer to the power receiver 105. The transmitter coil 103 is part of an output resonance circuit which comprises the transmitter coil 103 and a capacitor 303. In the example, the output resonance circuit is a series resonance circuit, but it will be appreciated that in other embodiments, the output resonance circuit may be a parallel resonance circuit. It will be appreciated that any suitable resonance circuit may be used including one using multiple inductors and/or capacitors.

The use of a resonance circuit including the transmitter coil 103 is well known to provide a more efficient power transfer in many scenarios and enables control of the power transfer by the frequency of the drive signal. Furthermore, having a power receiver which also employs a resonance circuit, i.e. where the receiver coil 107 is part of a resonance circuit, may result in resonant power transfer which enables a highly efficient power transfer.

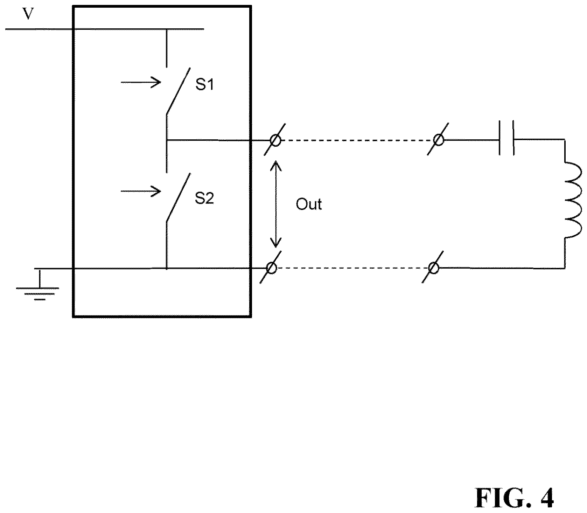

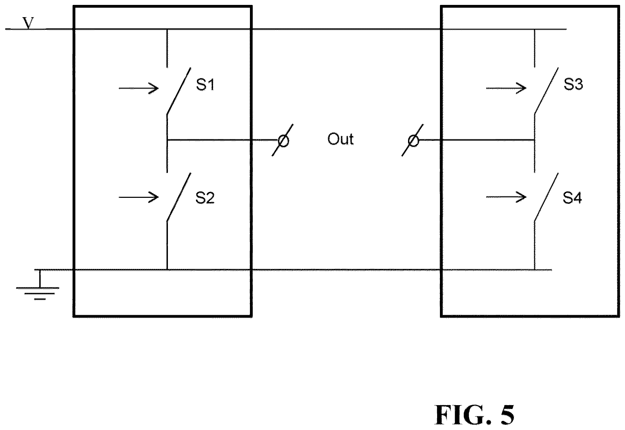

The driver 301 generates the current and voltage which is fed to the output resonance circuit and thus to the transmitter coil 103. The driver 301 is typically a drive circuit in the form of an inverter which generates an alternating signal from a DC Voltage. The output of the driver 301 is typically a switch bridge generating the drive signal by the appropriate switching of switches of the switch bridge. FIG. 4 shows a half-bridge switch bridge/ inverter. The switches S1 and S2 are controlled such that they are never closed at the same time. Alternatingly S1 is closed while S2 is open and S2 is closed while S1 is open. The switches are opened and closed with the desired frequency, thereby generating an alternating signal at the output. Typically, the output of the inverter is connected to the transmitter inductor via a resonance capacitor. FIG. 5 shows a full-bridge switch bridge/ inverter. The switches S1 and S2 are controlled such that they are never closed at the same time. The switches S3 and S4 are controlled such that they are never closed at the same time. Alternatingly switches S1 and S4 are closed while S2 and S3 are open, and then S2 and S3 are closed while S1 and S4 or open, thereby creating a square-wave signal at the output. The switches are opened and closed with the desired frequency and phase angle between the two legs.

The power transmitter 101 further comprises a power transmitter controller 305 which is arranged to control the operation of the power transmitter 101 in accordance with the desired operating principles. Specifically, the power transmitter 101 may include many of the functionalities required to perform power control in accordance with the Qi or Ki Specification.

The power transmitter controller 305 is in particular arranged to control the generation of the drive signal by the driver 301, and it can specifically control the power level of the drive signal, and accordingly the level of the generated power transfer signal. The power transmitter controller 305 comprises a power loop controller controlling a power level of the power transfer signal in response to the power control messages received from the power receiver 105 during the power transfer phase.

In the example of the power transmitter of FIG. 3, the power transmitter 101 comprises a first communicator 307 which is arranged to receive data and messages from the power receiver 105 as well as transmit data and messages to the power receiver 105 (as will be appreciated by the skilled person, a data message may provide one or more bits of information).

In the approach, the communication is performed by modulation of a communication carrier that is generated by a first communication coil 309. The first communicator 307 is coupled to the first communication coil 309 and is arranged to generate a communication drive signal which is fed to the first communication coil 309 to generate the communication carrier. The first communicator 307 may typically be arranged to generate the communication drive signal/communication carrier to have a substantially different frequency than the power transfer drive signal/ power transfer signal. In many embodiments, the frequency of the communication carrier may be no less than 10, 100, or 500 times higher than the frequency of the power transfer signal. In many embodiments, the frequency of the communication drive signal/ communication carrier may have a frequency of no less than 500kHz, 1 MHz, or 10 MHz. Specifically for an NFC implementation, the communication carrier frequency may be 13.56 MHz.

The first communicator 307 may be arranged to modulate the communication drive signal/ communication carrier in order to transmit data to the power receiver (in the following references to the communication drive signal also include the implicit reference to the communication carrier as appropriate).

The modulation is in the specific example an amplitude modulation of the communication drive signal, and specifically a binary communication using Amplitude Shift Keying (ASK) is used. However, it will be appreciated that in other embodiments, the modulation may use other approaches, such as phase or frequency modulation of the communication drive signal.

For communication from the power receiver to the power transmitter, the modulation of the communication drive signal may be a load modulation. The power receiver may be arranged to modulate the communication drive signal by varying a loading of the communication drive signal generated by the communication coil 309 in accordance with the data to be transmitted. The first communicator 307 is specifically arranged to sense variations in the voltage and/or current of the communication coil 307 and to demodulate the load modulation based on these. In typical embodiments, the first communicator 307 may for example receive data from the power receiver and forward it to the power transmitter controller 305 for controlling the power transfer signal etc.

In some embodiments, the communication may be in accordance with the Near Field Communication, NFC, Specifications and the power receiver may specifically include NFC functionality. In these embodiments, the first communicator 307 and the first communication coil 309 may implement (at least) the functionality of an NFC reader. Thus, in some embodiments, the communication drive signal! communication carrier is a constant level (except for modulation) 13.56 MHz signal.

The following description will focus on examples where the communication between the power transmitter and power receiver is by NFC communication and specifically where modulation of the NFC carrier in the direction from the power transmitter to the power receiver is by Amplitude Shift Keying (ASK) and modulation of the NFC carrier in the direction from the power receiver to the power transmitter is by load modulation.

The power transmitter comprises an object detector 311 which is arranged to detect an object when the power transmitter is in an idle phase. During the idle phase, no power transfer using the power transfer signal is active, and in many cases no communication is exchanged with any other device. Indeed, in the idle phase, the power transmitter may be fully inactive except for the object detection. The power transmitter may be arranged to enter the idle phase in response to a detection that no power receiver is present proximal to the transmitter coil 103/ coupling to the transmitter coil 103. In many embodiments, the power transmitter may be arranged to enter the idle mode in response to a determination that no communication receiver coil is present that couples to the (first) communication coil of the power transmitter. In some embodiments, the power transmitter may be arranged to enter the idle phase in response to a detection of a removal of a power receiver and/or a termination of a power transfer operation (in particular if this is due to a detection of an absence of a power receiver).

The idle phase may be a phase wherein no power receiver is detected to be present or coupling to the transmitter coil 103 or the first communication coil 309. In the idle phase, there may be no coupling to and/or communication link with any power receiver.

The object detector 311 may thus be arranged to detect if an object is brought sufficiently close to the power transmitter. In many embodiments, the object detector 311 may be arranged to detect that a loading of an electromagnetic field generated by the transmitter coil 103 or the first communication coil 309 exceeds a given threshold. This will typically be due to the presence of an inductor or metal coupling to the respective power transmitter coil, and thus the loading of the transmitter coil 103 or first communication coil 309 provides a good indication of whether an object, which specifically may be a power receiver, is present.

The object detector 311 may specifically detect an object being present if a loading of the first communication coil 309 or the transmitter coil 103 as appropriate exceeds a threshold. The loading of a coil may be determined as the power loss/resistive value provided by the coil. In many embodiments, the voltage amplitude may be kept relatively constant, and the load may simply be determined as a current amplitude (such as specifically an RMS value).

The object detector 311 is coupled to a first controller 313 which is arranged to receive an indication that an object has been detected, and thus the object detector 311 is coupled to the first controller 313 and provides an indication when an object is detected during the idle phase.

In response to receiving such an object detection, the first controller 313 is arranged to control the first communicator 307 to generate the communication carrier from the first communication coil 309. In particular, the first controller 313 is arranged to control the first communicator 307 to generate a drive signal for the first communication coil 309 such that an electromagnetic communication carrier is generated.

The first controller 313 further controls the first communicator 307 to seek to detect load modulation of the communication carrier. Thus, the first communicator 307 generates a communication carrier and proceeds to demodulate any load modulation imposed on this carrier.

In particular, the first communicator 307 may receive configuration data being modulated on to the communication carrier. If suitable configuration data is received, it is forwarded to the first controller 313 which is arranged to adapt an operation based on the configuration data. The configuration data may specifically include an (explicit or implicit) indication that the detected object is a power receiver transmitting configuration data that represents that the origin of the data is a power receiver. This may in some embodiments be explicit data directly stating that the configuration data is transmitted from a power receiver. In other embodiments, it may be more implicit by the configuration data including data that is only transmitted by a power receiver.

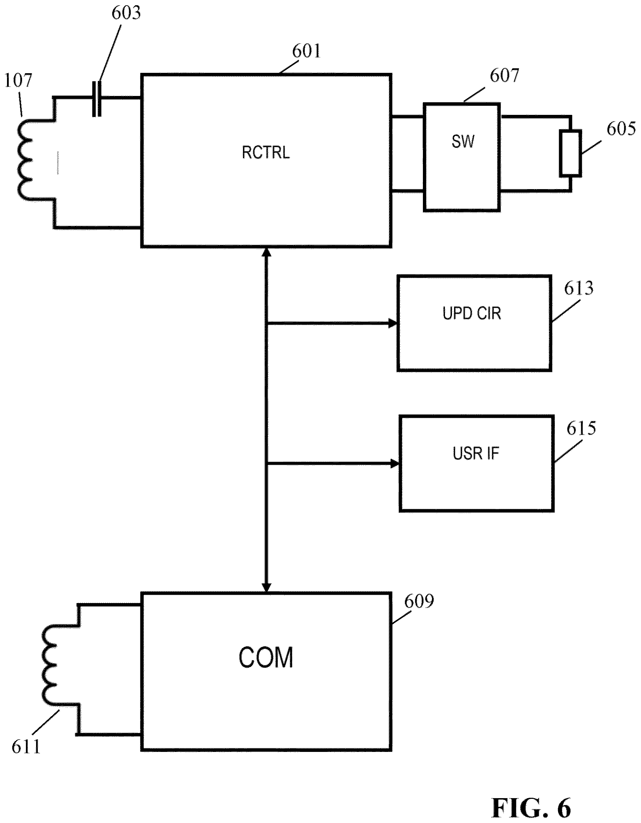

FIG. 6 illustrates some exemplary elements of the power receiver 105.

The receiver coil 107 is coupled to a power receiver controller 601 via a capacitor 603 which together with the receiver coil 107 forms an input resonance circuit. Thus, the power transfer may be a resonant power transfer between resonance circuits.

The power receiver controller 601 couples the receiver coil 107 to a load 605 via a switch 607 which specifically may be capable of connecting, disconnecting (or even shorting) the load 605. The power receiver controller 601 includes a power control path which converts the power extracted by the receiver coil 107 into a suitable supply for the load 605. In some embodiments, the power receiver controller 601 may provide a direct power path which simply connections the input resonance circuit to the switch 607 or load 605, i.e. the power path of the power transmitter controller 303 may simply be implemented by two wires. In other embodiments, the power path may include e.g. rectifiers and possibly smoothing capacitors to provide a DC voltage. In yet other embodiments, the power path may include more complex functions, such as e.g. voltage control circuitry, impedance matching circuitry, current control circuitry etc. Similarly, it will be appreciated that the switch 607 may only be present in some embodiments and that in some embodiments the load 605 may permanently be coupled to the input resonance circuit.

In addition, the power receiver controller 601 may include various power receiver controller functionality required to perform power transfer, and in particular functions required to perform power transfer in accordance with the Qi or Ki Specifications.

The power receiver controller 601 may further comprise functionality for communicating with the power transmitter 101. For example, it may be arranged to decode and demodulate data modulated onto the power transfer signal and it may be arranged to transmit data to the power transmitter 101 by load modulating the power transfer signal. In many embodiments, such as in the example of FIG. 6, a separate communication function, such as an NFC communication function, may be employed.

In the example of the power receiver of FIG. 6, the power receiver 105 comprises a second communicator 609 and a second communication coil 611. The second communication coil 611 is arranged to couple to the first communication coil 309 and thus the communication carrier induces a current (at least an emf) in the second communication coil 611.

The second communicator 609 is coupled to the second communication coil 611 and is arranged to determine amplitude variations in the induced signal and to demodulate amplitude modulations of the communication carrier. Thus, the second communicator 609 is arranged to decode data transmitted from the power transmitter by amplitude modulation of the communication carrier. It will be appreciated that in other embodiments, the second communicator 609 may be arranged to decode data modulated onto the communication carrier using other modulation formats such as frequency or phase modulation.

The second communicator 609 is further arranged to load modulate the communication carrier in order to transmit data from the power receiver to the power transmitter. Specifically, the second communicator 609 may comprise a load (such as a capacitor) which depending on the data to transmit can be switched between being coupled to the second communication coil 611 and not being coupled to the second communication coil 611. These load modulations may then be detected by the first communicator 307 of the power transmitter.

In the specific example, the second communication coil 611 and the second communicator 609 may provide NFC compatible communication operation. Specifically, the second communication coil 611 may be arranged to provide functionality corresponding to an NFC tag and to decode data that has been ASK modulated onto the communication carrier in accordance with the NFC specifications.

Thus, the second communicator 609 is arranged to transmit data to the power transmitter by varying the loading of the second communication coil 611 in response to data to be transmitted to the power transmitter 101. The load variations are then detected and demodulated by the power transmitter 101 as will be known to the person skilled in the art.

In the example, the second communicator 609 is furthermore arranged to demodulate amplitude, frequency, and/or phase modulation of the communication carrier in order to retrieve data transmitted from the power transmitter.

In operation, the system is arranged to control the drive signal such that the power transfer signal attains suitable operating parameters/ properties and such that the power transfer operates at a suitable operating point. In order to do so, the power transmitter is arranged to control a parameter of the drive signal using a power control loop where a power property of the power transfer signal/ drive signal is controlled in response to power control messages that are received from the power receiver. A power control loop is accordingly employed which controls a power property of the power transfer signal to result in the desired operating point at the power receiver. It will be appreciated that many other types of data may be exchanged between the power transmitter and the power receiver to support a range of functions.

The power receiver and the power transmitter can accordingly communicate using a communication carrier which in many cases may be a dedicated communication carrier, such as specifically an NFC communication carrier. In some embodiments, such as specifically Qi applications, the communication may use the power transfer signal as a communication carrier.

In many embodiments, this communication may be the only communication functionality of the power transmitter and the power receiver. For example, in many embodiments, the only communication functionality of the power transmitter is the NFC communication functionality arranged to communicate with a power receiver. In many embodiments, the only communication functionality of the power receiver is the NFC communication functionality arranged to communicate with a power transmitter.

The described wireless power transfer system further comprises functionality for providing update data and updating the power receiver devices based only on the communication channels/carrier that is also used for the power transfer communication, such as specifically for power control messages. In the specific example, the wireless power transfer system may include functionality supporting updating of power receivers based only on the NFC communication functions of the power transmitter and the power receiver. The approach allows such updating without requiring the devices to be coupled to the Internet or to a central update server etc. The approach may support low complexity and user friendly updating for in particular low complexity and low cost power receivers while providing an efficient approach that may easily be introduced in many systems.

The described update process for updating a power receiver (and in particular to provide the appropriate update data to the power receiver) is based on the use of an update process and a specific approach that allows the power transmitter to be provide an update means/channel for the power receiver. In order to support the update process, the power transmitter comprises an update circuit 315 which is arranged to perform update operations that allow update data to be provided to a power receiver.

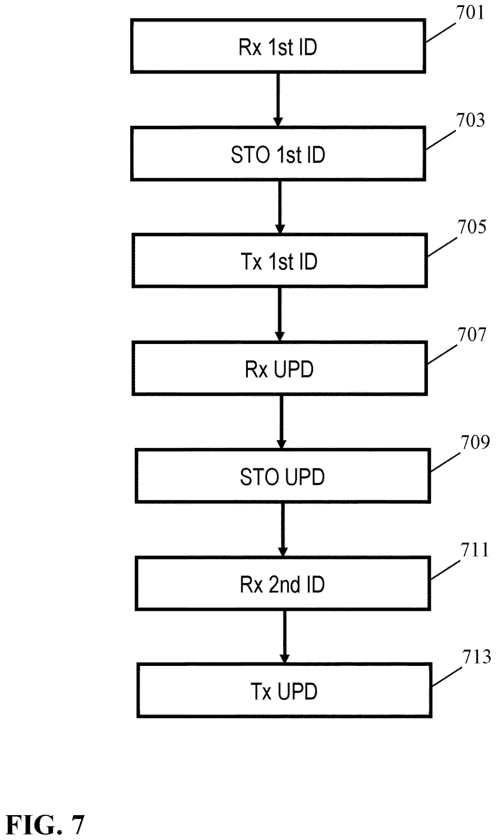

The update processor is coupled to the object detector 311 and is arranged to perform a process as illustrated in FIG. 7.

The process may initialize with the power transmitter operating/being in the idle phase. If at some point, the object detector 311 detects the presence of an object, the power transmitter controls the first communicator 307 to generate a communication carrier for potentially establishing a communication channel with the detected object. In the case where the detected object is a(n appropriate) power receiver, the power receiver proceeds to communicate with the power transmitter. The communication may specifically include configuration messages and may start a power transfer initiation process. As a result of the communication, the power transmitter and power receiver arrangement may often proceed to a connected phase wherein a communication carrier is generated and a bidirectional communication channel is available, but where power transfer using the power transfer signal is not active. In a connected phase, the power receiver may in some cases extract (small) amounts of power from the provided communication carrier to power reduced functionality in order to support the connected phase.

As part of the communication process, the power receiver is in the described approach arranged to transmit a power receiver identity indication to the power transmitter. The power receiver identification indication is provided to the update circuit 315.

The power receiver identification indication may be any data that provide a full or partial identification for a power receiver. The power receiver identification indication may be indicative of a unique identity for the power receiver or may e.g. be indicative of group identity for a group of power receivers to which the power receiver belongs. Such a group may be determined by a property of the power receiver, such as a manufacturer and/or type indicator for the power receiver.

Thus, when a new power receiver is detected and power transfer initialization is performed, the process may include the power receiver transmitting a power receiver identification indication (e.g. a unique device identity, or a shared identity such as a power receiver type or manufacturer) to the power transmitter.

In step 701, the update circuit 315 may accordingly receive a power receiver identification indication (referred to as the first power receiver identity indication) over the communication channel established by the communication carrier. The first power receiver identification indication is accordingly received from a first power receiver which may be a receiver desiring and/or potentially being eligible or suitable for receiving update data.

The process may proceed to step 703 in which the received first power receiver identification indication is stored by the update circuit 315. Thus, the update circuit 315 stores the identification of the first candidate power receiver thereby keeping a record of the first candidate power receiver having been detected by/in contact with the power transmitter, and thus that a potential candidate for receiving update data may have been detected by the power transmitter.

In some cases, the update circuit 315 may be arranged to store the power receiver identification indication of all power receivers that come into contact with the power transmitter. In other embodiments, the update circuit 315 may only store the power receiver identification indication of the most recent power receiver having been in contact with the power transmitter. In other embodiments, only a selected subset of power receiver identification indications may be stored, such as for example only power receivers from a particular manufacturer etc. In some cases, the power receiver may be arranged to transmit a request for update data to the power transmitter, and the update circuit 315 may be arranged to store the power receiver identification indication in response to receiving the request. For example, the power receiver may specifically transmit a request indicating that it is capable of supporting the described update process, and in response the update circuit 315 may store the power receiver identification indication for the purpose of performing such an update process.

In some scenarios, the power receiver may be removed after the transmission of the first power receiver identification indication. For example, the power transmitter may generate a user indication that the power receiver identification indication has been stored (e.g. it may switch on a green light to indicate that the power receiver identification indication has been successfully received and stored). In other embodiments, the power transmitter may be arranged to transmit a confirmation message to the power receiver indicating that the first power receiver identification indication has been stored. The power receiver may in response for example generate a user indication, such as a message on a display, indicating that the first power receiver identification indication has been stored and the power receiver can be removed.

In other cases, no particular action is taken in response to the storing of the first power receiver identification indication in order to alert the user of this. In some embodiments, the system may for example proceed to perform a normal power transfer operation or may e.g. remain in the connected phase for an extended time.

However, at some point the power receiver may be removed from being proximal to the power transmitter. At some point thereafter, the object detector 311 may detect the presence of a new object. The power transmitter may in response proceed to control the first communicator 307 to generate the communication carrier to provide a bidirectional communication channel. The power transmitter may then proceed to perform a communication exchange and if the detected object is a new power receiver, the system may for example proceed to perform a power operation.

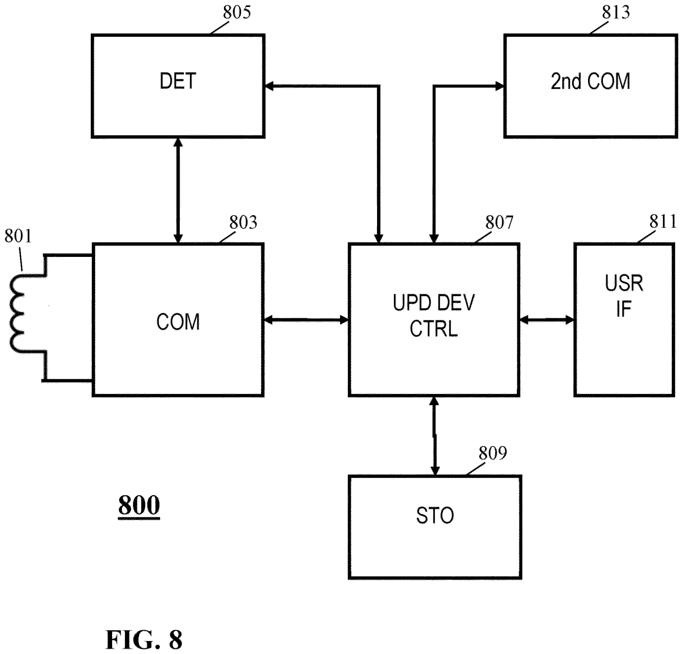

However, in the approach, an update device may be used to support the update process. FIG. 8 illustrates an example of some elements of an update device in accordance with some embodiments of the described update approach. The update device may in many embodiments be a dedicated device capable of providing update data to the power transmitter and may in many cases be a relatively low complexity device, such as specifically a Smart Card, RFID card, or similar. In many cases, the update device may have no other functionality than the update functionality and may be a device that is specifically provided and manufactured only to provide update functionality.

The update device of FIG. 8 comprises a communication coil 801 which will be referred to as the third communication coil 801. The third communication coil 801 is arranged to couple to the first communication coil 309 and specifically is arranged to receive/ detect the electromagnetic field/signal generated by the first communication coil 309. Thus, when a communication carrier is generated by the first communication coil 309, this may couple to the third communication coil 801 and current will be induced in the first communication coil 309. Thus, the third communication coil 801 may support the establishment of the communication channel with the power transmitter using the communication carrier generated by the first communicator 307 of the power transmitter.

The third communication coil 801 is coupled to a communicator 803 which henceforth will be referred to as the third communicator 803. The third communicator 803 is specifically capable of load modulating the electromagnetic field/communication carrier generated by the first communication coil 309, e.g. the third communicator 803 may be arranged to change a load of the third communication coil 801 dependent on the data to be received. The third communication coil 801 and the third communicator 803 may specifically be arranged to implement NFC communication functionality and may be arranged to communicate with the first communicator 307 in accordance with the NFC communication specifications.

The update device further comprises a detector 805 which is arranged to detect the presence of a communication carrier from a power transmitter. The detector 805 is in the example coupled to the third communicator 803 and is arranged to be provided with an indication of an induced signal level of the third communication coil 801. The detector 805 may be arranged to detect that a communication carrier is present in response to a detection that the level of the signal/current induced in the third communication coil 801 exceeds a given threshold. The third communication coil 801 is typically part of a resonance circuit tuned to a very different frequency than that of the power transfer signal (e.g. to 13.56MHz for NFC communication) and a simple signal detection is typically sufficient.

Indeed, in some embodiments, the update device may be arranged to be powered by extraction of power from the communication carrier. In such cases, the functionality of the power receiver may inherently power up and start operation when a suitable communication carrier is present. In such a scenario, the detection may inherently be deemed to have occurred when the update device powers up.

The update device further comprises an update device controller 807 which is arranged to control and execute a number of the functions and operations of the update device.

The update device controller 807 is coupled to a store 809 which stores update data for a power receiver. As mentioned, such update data may for example be firmware update data, authentication data, or configuration data etc.

The update device controller 807 may be arranged to retrieve update data from the store 809 and control the third communicator 803 to transmit the update data to the power transmitter and specifically to the first communicator 307.

In addition to the update data itself, the update device may in some embodiments transmit configuration data to the power transmitter. The configuration data may be stored in the store 809 and retrieved together with the update data and transmitted to the power transmitter. The configuration data may comprise an indication that the update device is indeed an update entity that holds update data for transmission to the power transmitter.

In many embodiments, the communication between the third communicator 803 and the first communicator 307 is in accordance with the NFC communication specification. Indeed, in many embodiments, the update device may be a low complexity NFC device and may specifically be an NFC card, an NFC card emulator, a Smart card, a NFC tag with non-volatile memory, etc.

In some embodiments, the update device may be implemented as e.g. a software application of a computational user device (e.g. mobile phone) that may identify as an update device, and specifically may identify as/ emulate being a smart card containing update data such as relevant firmware or e.g. revocation keys.

In many embodiments, the configuration is specifically transmitted in an NFC Data Exchange Format, NDEF, message of a Near Field Communication, NFC, protocol used by the communicator. The use of NFC and in particular NDEF messages for transmitting the configuration data provides a highly efficient and reliable approach while allowing a low complexity and facilitated operation and implementation.

In some embodiments, the update device may be arranged to extract power from the power transfer signal. However, this power extracting will typically be very small and substantially insignificant in comparison to the power levels of a power extraction by a power receiver during a power transfer phase.

In many embodiments, the update device may be a device that is not powered by the power transfer signal, and specifically which is not a power receiver arranged to/ being capable of performing a power transfer with the power transmitter using the power transfer signal.

In particular, the update device may in some cases comprise an internal power source, and e.g. may be some embodiments be battery powered by an internal battery. In yet other embodiments, it is possible that the update device may be powered from an external source. Indeed, in some embodiments, the update device may even be a device that is arranged to be powered by being plugged into the mains power supply.

However, in many embodiments and implementations, the update device may be a device that is exclusively powered by the communication carrier. In particular, the update device may in many cases be a low complexity and low power device that is arranged to extract power from the communication carrier to power the required functionality for transmitting the configuration data and the update data. In order to maintain a low power consumption to enable or facilitate such power extraction, the functionality of the update device may typically be kept to a minimum in order to store the data and transmit it to the power transmitter. For example, an NFC smart card may comprise only minimal functionality for storing and communicating with the complementary NFC functionality of the power transmitter.

In many cases the functionality for extracting the power from the communication carrier may also be kept as simple as possible. For example, in many cases, the update device controller 807 may comprise a rectifier (e.g. a diode or diode bridge), a small smoothing capacitor, and possibly a voltage regulator for providing a regulated DC voltage to e.g. an embedded microcontroller or microprocessor to perform the communication with the power transmitter.

The third communicator 803 is arranged to transmit the configuration and update data to the power transmitter by load modulating the communication carrier. For example, the third communicator 803 may be arranged to switch in and out a load of the third communication coil 801 in line with the data symbols that are to be transmitted.

Thus, as a specific example, when the power transmitter detects the presence of an object, it may proceed to generate a communication carrier which in some cases are then used to communicate with a power receiver (e.g. an NFC front end) to establish a communication and control loop with the power receiver in order to initiate power transfer. However, in cases where the object is not a power receiver requesting power transfer, but instead is an update device with update data, the power transmitter proceeds to establish a communication with the update device such that the update data can be transmitted to the power transmitter. The update device may specifically transmit configuration data that allows the power transmitter to determine that the object is indeed such an update device with update data.

In the process, the power transmitter may accordingly detect that the first candidate power receiver has been replaced by an update device. The update circuit 315 may in step 705 in response to the detection of the presence of the update device proceed to transmit an indication of the power receiver identification indication to the update device. Thus, the update circuit 315 may retrieve the stored first power receiver identification indication and transmit this to the update device.

The received first power receiver identification indication may be fed to the update device controller 807 which proceeds to receive update data that is linked to the received power receiver identification indication. Thus, rather than just uploading any or all update data that is stored by the update device, the update device controller 807 of the update device is arranged to specifically select and transmit the update data that is linked to the received power receiver identification indication.

For example, the update device may store update data for multiple different power receivers with each set of update data being linked with one (or more) power receivers. For example, the update device may store a number of update data packages which are each linked with one or more specific power receiver type and manufacturers. For example, the store 809 may comprise first update data package for a power receiver of type A from manufacturer X, a second update data package for a power receiver of type B from manufacturer X, a third update data package for a power receiver of type C from manufacturer Y, etc. When receiving the first power receiver identification indication, the update device controller 807 may proceed to determine the associated type and manufacturer from the first power receiver identification indication (e.g. the power receiver identification indication may include such information directly or e.g. a look up table may be used to link identity information to type and manufacturer. The update device controller 807 may then proceed to extract the corresponding update data package and transmit it to the power transmitter.

In some cases, the update device may only store a single update data package and the update device controller 807 may evaluate whether the received first power receiver identification indication matches the identity (e.g. type or manufacturer) linked with the stored update data package. If so, the update data package may be transmitted to the power transmitter and otherwise no update date may be transmitted to the power transmitter.

Thus, in many embodiments, the store 809 may store a set, and specifically a plurality, of update data packages where each package is linked with a power receiver identity indication. The update device controller 807 may accordingly proceed to retrieve the update data package that is linked with the specific power receiver identification indication received from the power transmitter (the first power receiver identification indication). It may then transmit the selected update data to the power transmitter for further transmission to the power receiver.

In some embodiments, the power transmitter may be arranged to transmit an update process complete indication to the update device with the update process complete indication being transmitted when a given update process has been performed. The update process may for example be that of receiving the update data from the update device.

The update device may in such cases comprise a user interface 811 and the update device may generate a user alert in response to receiving the update process. Thus, when the update process complete indication is received, an alert may be provided to the user, e.g. specifically to indicate to the user that the update data transmission has been successful and/or that the update device can be removed.

The user interface and alert may typically be kept simple and may for example simply be a LED or buzzer merely being switched on. For example, it may be advantageous for an update device in the form of a smart card to implement a user interface that can e.g. indicate that the content of the particular card has been sent to the power transmitter, and that the card can be removed.

The process may accordingly perform step 707 where the power transmitter/first communicator 307/update circuit 315 receives update data for the first power receiver identification indication from the update device.

It then proceeds to step 709 where the update data is stored together with a link to the first power receiver identification indication. Thus, the update circuit 315 stores the update data received for the first power receiver identification indication.

At some point after the update data has been uploaded to the power transmitter, the update device may be removed from the power transmitter and the power transmitter may be ready to receive a new device. Typically, the power transmitter may return to an idle (e.g. ping phase) in preparation for receiving a new device.

At some point thereafter, a power receiver, referred to as the second candidate power receiver, may be positioned for power transfer. The second candidate power receiver may be detected by the object detector 311 and the system may initiate a power transfer operation as previously described for the first power receiver. The power transmitter may again in response to the detection proceed to control the first communicator 307 to generate the communication carrier to provide a bidirectional communication channel. As part of the process, the second candidate power receiver proceeds to transmit a power receiver identification indication to the power transmitter. This second power receiver identification indication indicates a (possibly unique) identity of the second candidate power receiver.

Thus, the process may proceed in step 711 where the power transmitter/update circuit 315 receives a second power receiver identity indication over the communication channel from a second candidate power receiver in response to a detection by the object detector that the update device has been replaced by the second candidate power receiver.

The update circuit 315 then proceeds in step 713 where the update circuit 315 may compare the received second power receiver identification indication to the power receiver identification indication(s) for which update data has been received from an update device. The update circuit 315 may search through the links stored with update data. If the update circuit 315 detects a match, it may proceed to extract the update data linked to the power receiver identification indication and transmit it to the second candidate power receiver using the generated communication carrier/established communication carrier.

In some cases, the update circuit 315 may only store update data for a single power receiver, and the update circuit 315 may be arranged to receive the update data and transmit it to second candidate power receiver if the second power receiver identification indication matches the stored power receiver identification indication for the update data.

It will be appreciated that any suitable match criterion may be used. In many embodiments, the match criterion may be that the second power receiver identification indication is identical to the stored power receiver identification indication. In other cases, a suitable match criterion may be that part of the power receiver identification indications are identical or that e.g. both power receiver identification indications belong to the same set/group/collection of power receiver identification indications. Thus, in some embodiments, the match criterion may be one that uniquely identities that the first and second candidate power receivers are the same power receiver, but in other embodiments, the match criterion may for example be that the candidate power receivers are the same type and by the same manufacturer.

Thus, in step 713 the update circuit 315 may receive a second power receiver identity indication over the communication channel from a second candidate power receiver in response to a detection by the object detector 311 that the update device has been replaced by the second candidate power receiver.

The second candidate power receiver may accordingly receive update data that is specific to the power receiver, and which particularly is suitable for the specific power receiver. The process may specifically in many embodiments ensure that the power receiver requesting the update data is the same power receiver that is subsequently provided the update data.

The power receiver of FIG. 6 may accordingly first operate as the first candidate power receiver and subsequently as the second candidate power receiver. It may then proceed to perform the appropriate update process using the received update data provided to the power receiver from the update device using the power transmitter as a communication medium.

The power receiver of FIG. 6 accordingly comprises an update circuit 613 which is arranged to control the communication circuit 609 to receive the update data. The update circuit 613 may then perform an update process using the received update data. For example, if the update data is firmware update data for the power receiver, the update circuit 613 may proceed to replace existing firmware with the received firmware update data.

The approach may provide a highly reliable, efficient, and secure approach for implementing an update approach allowing power receivers to be updated. A particular advantage is that a reliable, secure, flexible, user friendly, and practical update approach can be achieved while relying on only the communication functionality that is also used for power transfer operations. Thus, the approach may allow efficient updating without requiring any additional communication functionality at either the power transmitter or the power receiver. Further, the update device may be a low complexity device and may for example simply be a low complexity and low cost Smartcard which may be easily distributed.

The approach may in particular remove the requirement for the power receiver to have dedicated functionality, such as specifically communication functionality, for the purpose of updating the power receiver. Further, it allows the power receiver to perform update functions while being positioned on the power transmitter and receiving power from the power transmitter. Thus, specific and dedicated functionality for powering the power receiver during an update process can be avoided. Indeed, in many circumstances it may be particularly difficult to connect an update device directly to the power receiver, and in particular due to it requiring to be powered by a power transmitter simultaneously. Although it could be possible to include power transmission functionality in an update device, this would render the update device substantially more complex, large, and/or costly than what can be achieved with the described approach.

As a specific example, a user seeking to update a power receiver device may request and be sent an update device, such as specifically a Smartcard. The user may then perform the update process using a suitably equipped power transmitter by first positioning the power receiver device on the power transmitter and waiting for the power transmitter or power receiver to indicate that it is in a connected phase ready to proceed to power transfer. The user may then proceed to remove the power receiver device and instead replace it by the update device/Smartcard. The user may leave the update device/Smartcard until an indication is provided that update data has been uploaded (e.g. a LED may light up on the power transmitter or the update device/Smartcard). The user may then remove the update device/Smartcard and put the power receiver back on the power transmitter. The user may then leave the power receiver on the power transmitter until an indication is provided that the power receiver has been updated, e.g. by this being indicated on a display/user interface on the power receiver. Thus, a very user friendly and easy manual update process may be performed that can obviate the need for any dedicated update communication functionality to be implemented in the power receiver or the power transmitter (and in particular without requiring these to be able to access a remote server).

In this example, a dedicated, specific, and targeted operation may be performed to update the power receiver device. The process may for example include some safety or back-up mechanisms. For example, if a sufficiently long delay occurs for the replacement of the power receiver by the update device, or of the update device by the power receiver, the power transmitter may proceed to abandon the update process (and may e.g. provide an indication as such, e.g. by flashing a red LED).

In some embodiments or applications, a less specific and dedicated process may be used. For example, whenever a new power receiver is encountered by the power transmitter (e.g. whenever power transfer is performed with a new power receiver), the power transmitter may proceed to store the power receiver identification indication received from the power receiver. The power transmitter may accordingly build up a list of the power receivers with which it has been in contact. If at some point, a suitable update device is connected to the power transmitter, the update circuit 315 may seek to extract update data for all power receivers with which it has been in contact. It may sequentially transmit power receiver identification indications to the update device which for each power receiver identification indication may detect if it has stored update data, and if so transmit it to the power transmitter. The power transmitter may proceed to store all the received update data linked with the corresponding power receiver identification indication. Subsequently, whenever a new power receiver is encountered, it may be detected whether the corresponding power receiver identification indication matches a stored power receiver identification indication. If so, the power transmitter may inform the power receiver that it has available update data and it may proceed to transmit this to the power receiver.

The described approach and devices may accordingly provide a very user friendly and efficient update process that does not require any communication functionality beyond that required for the power transfer operation.

It will be appreciated that the update data may be different in different embodiments and/or scenarios. In many embodiments, the update data may advantageously comprise authentication data and/or power receiver firmware update data.

In some embodiments, the update data may comprise software/ firmware update data for the power receiver and the update circuit 613 of the power receiver may be arranged to update software/firmware of the power receiver using the received software/firmware update data.

The software/firmware data may specifically enable additional functions or operations to be introduced to existing power receivers, including potentially proprietary functions and operations. Thus, the approach may allow a practical approach for allowing new functionality to be introduced to deployed power receivers without requiring any of these to have any functionality for communicating with e.g. remote servers or the Internet. Similarly, the approach may allow functions, routines, and/or operations to be updated or modified. Specifically, software/firmware may be provided that can directly replace existing software/firmware implementing a specific function. Such an approach may in particular be suitable to address and repair errors, bugs, or faults in distributed power receivers.

In some embodiments, the update data may indicate that some software/ firmware should be discarded or removed from the operational software of the power receiver. For example, the update data may indicate that a specific function or operation should be removed and no longer be available.

In many embodiments, the update data may comprise power transmitter authentication data and specifically may include a list of one or more power transmitter that has been authenticated and/or for which authentication has been revoked. The power transmitter may keep a local list of power transmitter that are allowed to provided power and/or a list of power transmitters that are not-allowed to provide power. Specifically, the power receiver may keep a list of power receiver identities that may be supported by a power transfer. Additionally or alternatively, it may keep list of power transmitter identities that may support a power transfer. Thus, a list of authenticated and/or non-authenticated power transmitters may be stored by the power receiver.

In such cases, the update data may indicate that a specific power transmitter identity may now be added to and/or removed from the list of authenticated devices and/or a list of non-authenticated devices. The update circuit 613 may accordingly when receiving such update data modify the list by removing or adding the indicated power transmitter to the list of authenticated devices and/or the list of non-authenticated devices. Typically, the power transmitter may be indicated by a power transmitter identity (which may be shared by a group of power transmitter, such as e.g. an indication of a type or brand of power receivers).

In many embodiments, the update data may accordingly comprise authentication data and the update circuit 613 may be arranged to update stored authentication data based on the received authentication data. For example, in many embodiments, the received update data may include indication of at least one device/entity identity/entity as being authenticated or not authenticated. For example, the update data may in many embodiments include an indication of one or more identities for which authentication has been revoked/ granted.

When the power receiver subsequently seeks to initiate power transfer from a new power transmitter, the initialization process may include the power transmitter transmitting an identity (e.g. a unique device identity, or a shared identity such as a power receiver type or manufacturer) to the power receiver. The identity may be compared to the stored list(s) and if it is found to be on a list of authenticated power transmitters, the power transfer initialization may proceed to the power transfer phase. If the identity is on a list of non-authenticated devices, the initialization of the power transfer phase may be terminated. If the identity is not on a list of authenticated devices or non-authenticated devices, the power receiver may in different embodiments and scenarios take different approaches. For example, in some embodiments (e.g. if only a list of authenticated devices is stored), the power transmitter may terminate power transfer phase initialization if the received identity is not on the list of authenticated devices. In some embodiments (e.g. if only a list of non-authenticated devices is stored), the power receiver may proceed with power transfer phase initialization if the received identity is not on the list of non-authenticated devices. In some embodiments where the power receiver may store both a list of authenticated devices and a list of non-authenticated devices, the power receiver may e.g. proceed to the power transfer phase if the identity is not on either list but with e.g. the operation in the power transfer phase being constrained (e.g. to a lower power level).

Thus, the approach may allow an efficient way of updating and managing authentication data determining which power transmitters can be used to provide power transfer or not. This may for example provide a safety guard against unauthorized, and potentially faulty or unsafe, power transmitters being introduced to a wireless power transfer deployment.

In many embodiments and applications, it may be desirable for the update approach to be flexible and adaptable. In particular, it may be desirable for the approach to simultaneously be used for different functions and purposes, including in particular for different update purposes.

In some embodiments, the update data may include an indication of what type of update data is provided by the update device. Specifically, in some embodiments, the update device may be arranged to include an indication of whether the update data that is (to be) transmitted to the power receiver is software/firmware update data or authentication update data. The update circuit 613 of the power receiver may then adapt the update operation in dependence on the type of update data. For example, if the update data is indicated to include firmware update data, the update circuit 613 may proceed to receive the firmware update data and initiate a firmware update. Conversely, if the update data is indicated to include authentication update data, the update circuit 613 may proceed to receive the authentication update data and initiate an authentication update, such as modifying a list of authenticated or non-authenticated devices. Indeed, in some embodiments, the same update device, e.g. the same Smart Card, may provide both e.g. authentication update data and firmware update data. In such cases, the type indication may indicate that both of these types of update data are/can be provided and the power receiver may proceed to select one of the update operations or indeed may typically perform both update operations. It will be appreciated that whereas firmware and authentication updates are two operations that are particularly suitable for the described approach, other types of update data and update operations may be performed in other embodiments.

In some embodiments and scenarios, process may be performed iteratively. For example, an update package can be distributed over a plurality of update devices, such as over multiple SmartCards that each have storage capacity smaller than the data package size.

In such cases, the process may in some cases repeat steps 705 to 709 in order to store data packages that are received from multiple update devices, or at least in multiple operations. For example, in connection with the upload of update data from a first update device, there may also be provided an indication that this is only a partial upload and that a further interaction is required. Following step 709, the update circuit 315 may then return to step 705 where a new update device may be detected, and the first power receiver identification indication is transmitted to the new update device. It may then proceed with steps 707 and 709 where update data is received from the new update device and with this also being stored. In some cases, the update data may be combined into a single update package and in other cases, it may be treated as separate update packages/files.

Following, the detection of the second candidate power receiver, the method may proceed to step 713 where the totally stored update data for that power receiver identification indication is transmitted to the second candidate power receiver.

In some cases, e.g. where the storage capacity of the power transmitter or power receiver is limited, the method may proceed to step 711 before returning to step 705. Thus, in some iterative scenarios and embodiments, the power transmitter may receive update data from one update device, transmit it to the power receiver before receiving update data from a second update device and transmitting this to the power receiver.

The approach may in this way support a scenario where larger data packages may be distributed/communicated by a user repeatedly replacing update devices (and/or update devices and the power receiver). Specifically, if an update package is too big to be transmitted in one operation or stored in one update device, the user can be guided to repeat the described steps. Steps 701 and 703 can be skipped, since the first power receiver identification indication may be stored between iterations. In some cases, the update device may be an individual device which as described includes a store comprising the update data. The update device controller 807 may accordingly be arranged to retrieve the update device from the local store.

However, in other embodiments, the update device may include a second communication circuit 813 which is arranged to communicate with a remote update server and the update device may in this case be arranged to retrieve the update data from the remote update server. The remote server may specifically be a server accessible over the Internet and the second communication circuit 617 may specifically include functionality for communicating with the remote update server via a communication link that includes the Internet.

The update device may for example include a second communication circuit 813 which includes a WiFi, Bluetooth, Ethernet, cellular or other communication functionality that allows it to communicate with other devices, and specifically which allows the update device to connect to the Internet. The second communication circuit 813 may specifically comprise functionality for accessing and communicating over the Internet,

The second communication circuit 813 may transmit a request for update data to the remote update server. The request may include an indication of the power receiver identification indication, and thus the second communication circuit 813 may include the received power receiver identification indication in the request. The remote update server may accordingly retrieve the update data for the specific power receiver identification indication and transmit it to the update device. Thus, the update device may retrieve the update data from the remote update server. After receiving it from the remote update server, the update device may proceed to transmit the update data over the communication channel provided by the communication carrier.

As a specific example, the update device may be a mobile phone which is arranged to communicate with the power transmitter using NFC communication and which is further arranged to access the Internet using e.g. a cellular or WiFi connection.

In such approaches, the described approach may accordingly be used to provide update data from a remote update server without requiring the power transmitter or the power receiver to have any functionality for directly accessing such a remote update server. The approach may allow the update data to continuously be updated and thus may allow the system to effectively distribute update data to power receivers in a deployed wireless power transfer system without requiring the power receiver to have dedicated communication functionality for connecting to remote update servers, or specifically the Internet.

In some embodiments, the update circuit 315 is arranged to determine a signature for the update data, such as specifically a hash, encrypted identity, or watermark. It may then proceed to determine whether the signature has desired properties, such as that it specifically matches a list of acceptable signatures for the specific receiver. As another example, the signature may be used to check the integrity of the update data.

In many embodiments, means may be provided which allow the user to control the update operation, and in particular may control whether the update process continues to completion or whether it is interrupted and terminated at some point.

For example, in some embodiments the power transmitter may include a user interface 317 which may receive a user input. The update circuit 315 may be arranged to complete or terminate the update data distribution process conditionally on the user input. For example, in some cases, the update circuit 315 may be arranged to require that the user positively inputs a confirmation that the process should go ahead.

As an example, when the power transmitter detects the presence of an update device, it may proceed to generate a user indication indicative the possibility of an update process. For example, the power transmitter may include a display on which a query such as "Proceed with update of power receiver?". The power transmitter may then await a confirmation user input, such as the user pressing a suitable button (or e.g. a suitable position of a touch display). The power transmitter may be arranged to only transmit the update data to the power receiver if such a positive user input is received.

It will be appreciated that such a conditional test of a user input may be performed at different times in different embodiments. For example, the confirmation may be requested as soon as the update device is detected, and the operation may be halted until a confirmation input is received. Thus, in such cases, the power transmitter may e.g. be arranged to not receive the update data until a user confirmation has been received. In other cases, the power transmitter may proceed to receive the update data but not transmit it unless a confirmation input is received. Indeed, in some cases, if no confirmation input is received within a given time interval or before an event occurs (such as e.g. the update device being removed), the update circuit 315 may proceed to delete the received update data from the local store.

In some embodiments, a user interface 811 may alternatively or additionally be included in the update device itself and the transmission of the update device may be conditional on a confirmation user input being received by this user interface.

For example, the update device may include a display which in response to a detection of the communication carrier may request the user to confirm that the update device should be uploaded. If the user confirms, e.g. by pressing a suitable button, the update device proceeds to transmit the update data and otherwise it proceeds to not transmit the data. In some cases, the user confirmation may be in the form of a user action instigating an operation required for the update process. For example, if the update device is a communication device retrieving the update data from a remote source, the user confirmation input may be provided in the form of a user input instructing or allowing the update device to communicate with the remove server.

In some cases, the power receiver may include a user interface 615 and the process may only proceed if a user confirmation input is received. For example, in response to detecting the communication carrier, or possibly in response to a configuration message indicating that the update process is supported by the power transmitter, the user interface may generate a user message/indication that the power transmitter supports an update process and request the user to indicate whether to proceed or not. The user may provide an input to indicate that the process should go ahead. In this case, the power receiver may proceed to transmit the power receiver identification indication and otherwise it may proceed to not transmit the power receiver identification indication.

Thus, in many embodiments, the user may be asked to confirm the update process, e.g. during each of the steps, sometimes on the receiver, sometimes on the transmitter, and sometimes on the update device.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. The inclusion of a feature in a dependent claim of one independent claim does not imply a limitation to this independent clam but rather indicates that the feature is equally applicable to other independent claims as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus, references to "a", "an", "first", "second" etc. do not preclude a plurality. Reference signs in the claims are provided merely as a clarifying example shall not be construed as limiting the scope of the claims in any way.

In some embodiments, there may be provided:
Embodiment 1. A power transmitter (101) for wirelessly providing power to a power receiver (105) via an electromagnetic power transfer signal when in a power transfer phase; the power transmitter (101) comprising:
   a transmitter coil (103) arranged to generate a power transfer signal in response to a drive signal;
   a driver (301) arranged to generate a drive signal for the transmitter coil (103) to generate the electromagnetic power transfer signal when in the power transfer phase;
   a communicator (307, 309) arranged to communicate with the power receiver (105), the communicator (307, 309) being arranged to form a bidirectional communication channel using a communication carrier, the communicator (307, 309) being arranged to transmit data over the communication channel by modulating the communication carrier and receiving data over the communication channel by demodulating a modulation of the communication carrier;
   an object detector (311) arranged to perform object detection when the power transmitter (101) is in an idle phase;
   an update circuit (315) arranged to perform the steps of:
      receiving (701) a first power receiver identity indication over the communication channel from a first *(candidate)* power receiver in response to the object detector (311) detecting a presence of the first *(candidate)* power receiver;
      storing (703) the first power receiver identity indication;
      transmitting (705) the first power receiver identity indication to an update device over the communication channel in response to a detection by the object detector (311) that the first power receiver has been replaced by the update device;
      receiving (707) update data from the update device over the communication channel;
      storing (709) the update data and a link between the update data and the first power receiver identity;
      receiving (711) a second power receiver identity indication over the communication channel from a second *(candidate)* power receiver in response to a detection by the object detector (311) that the update device has been replaced by the second *(candidate)* power receiver; and
      retrieving (713) the update data and transmitting it to the second *(candidate)* power receiver over the communication channel in response to a match between the first power receiver identity and the second power receiver identity.
Embodiment 2. The power transmitter (101) of embodiment 1 comprising a user interface and the wherein the update circuit (315) is arranged to transmit the update data to the second power receiver conditionally on the user interface receiving a confirmation user input.
Embodiment 3. The power transmitter (101) of embodiment 1 or 2 wherein the update circuit (315) is arranged to determine a signature for the update data, and to only transmit the update data to the second power receiver if the signature meets a criterion.
Embodiment 4. The power transmitter (101) of any previous embodiment wherein the update circuit (315) is further arranged to perform the steps of:
   transmitting the first power receiver identity indication to a further update device over the communication channel in response to a detection by the object detector that the update device has been replaced by the further update device;
   receiving further update data from the further update device; receiving a third power receiver identity indication over the communication channel from a third *(candidate)* power receiver in response to a detection by the object detector that the further update device has been replaced by the third *(candidate)* power receiver; and
   transmitting the further update data to the third *(candidate)* power receiver over the communication channel in response to a match between the first power receiver identity and the third power receiver identity.
Embodiment 5. The power transmitter (101) of any previous embodiment wherein the update data comprises at least one of:
   authentication data; and
   power receiver firmware update data.
Embodiment 6. The power transmitter (101) of any previous embodiment wherein the communication channel is a Near Field Communication, NFC, channel.
Embodiment 7. A wireless power transfer system comprising the power transmitter (101) of any of the previous embodiments and further comprising the update device (800), the update device (800) comprising:
   a first communication circuit (803) arranged to communicate data with the power transmitter (101) over the communication channel;
   an update controller (807) arranged to retrieve first update data linked with the first (candidate) power receiver identity indication; and wherein the first communication circuit (803) is arranged to transmit the first update data to the power transmitter over the communication channel.
Embodiment 8. The wireless power transfer system of embodiment 7 further comprising a store (809) arranged to store a set of at least one update data package each linked with a power receiver identity indication; and wherein the update processor (807) is arranged to retrieve the first update data from the store as an update data package linked with the first power receiver identity indication.
Embodiment 9. The wireless power transfer system of embodiment 7 further comprising a second communication circuit (813) arranged to communicate with a remote update server over a communication link not using the communication carrier; the second communication circuit (813) further being arranged to send a request for update data for the first power receiver identity indication to the remote update server and to receive the first update data from the remote update server.
Embodiment 10. The wireless power transfer system of embodiment 9 wherein the communication link includes at least one Internet communication link.
Embodiment 11. The wireless power transfer system of any of embodiments 7-10 wherein the update device (800) comprises a user interface (811) and the update processor (807) is arranged to transmit the first update data to the power transmitter (101) only if a confirmation user input is received by the user interface (811).
Embodiment 12. The wireless power transfer system of any of embodiments 7-11 further comprising the power receiver (105), the power receiver (105) comprising a communication circuit (609) arranged to communicate with the power transmitter (101) over the communication channel; and an update circuit (613) arranged to control the communication circuit (609) to transmit a power receiver identity indication for the power receiver (105) in response to a detection of the communication carrier; the update circuit (613) further being arranged to control the communication circuit (609) to receive the update data and to perform an update process using the update data.
Embodiment 13. The wireless power transfer system of any of embodiments 7-10 wherein the update device (800 Embodiment comprises a user interface (811) and the update circuit (613) is arranged to transmit the power receiver identity indication conditionally on the user interface (811) receiving a confirmation user input.

## Claims

1. A power transmitter (101) for wirelessly providing power to a power receiver (105) via an electromagnetic power transfer signal when in a power transfer phase; the power transmitter (101) comprising:
a transmitter coil (103) arranged to generate a power transfer signal in response to a drive signal;
a driver (301) arranged to generate a drive signal for the transmitter coil (103) to generate the electromagnetic power transfer signal when in the power transfer phase;
a communicator (307, 309) arranged to communicate with the power receiver (105), the communicator (307, 309) being arranged to perform bidirectional communication using a communication carrier, the communicator (307, 309) being arranged to transmit data by modulating the communication carrier and receiving data by demodulating a modulation of the communication carrier;
an object detector (311) arranged to perform object detection when the power transmitter (101) is in an idle phase;
an update circuit (315) arranged to perform the steps of:
receiving (701) a first power receiver identity indication modulate on communication carrier by a first power receiver in response to the object detector (311) detecting a presence of the first power receiver;
storing (703) the first power receiver identity indication;
transmitting (705) the first power receiver identity indication to an update device by modulation of the communication carrier in response to a detection by the object detector (311) that the first power receiver has been replaced by the update device;
receiving (707) update data modulated on the communication carrier by the update device;
storing (709) the update data and a link between the update data and the first power receiver identity;
receiving (711) a second power receiver identity indication modulated on the communication carrier by a second power receiver in response to a detection by the object detector (311) that the update device has been replaced by the second power receiver; and
retrieving (713) the update data and transmitting it to the second power receiver by modulation of the communication carrier in response to the first power receiver identity and the second power receiver identity meeting a match criterion.

2. The power transmitter (101) of claim 1 comprising a user interface and the wherein the update circuit (315) is arranged to transmit the update data to the second power receiver conditionally on the user interface receiving a confirmation user input.

3. The power transmitter (101) of claim 1 or 2 wherein the update circuit (315) is arranged to determine a signature for the update data, and to only transmit the update data to the second power receiver if the signature meets a criterion.

4. The power transmitter (101) of any previous claim wherein the update circuit (315) is further arranged to perform the steps of:
transmitting the first power receiver identity indication to a further update device by modulation of the communication carrier in response to a detection by the object detector (311) that the update device has been replaced by the further update device;
receiving further update data modulated on the communication carrier by the further update device;
receiving a third power receiver identity indication modulated on the communication carrier by a third power receiver in response to a detection by the object detector (311) that the further update device has been replaced by the third power receiver; and
transmitting the further update data to the third power receiver by modulation of the communication carrier in response to the first power receiver identity and the third power receiver identity meeting a match criterion.

5. The power transmitter (101) of any previous claim wherein the update data comprises at least one of:
authentication data; and
power receiver firmware update data.

6. The power transmitter (101) of any previous claim wherein the communicator (307, 309) is arranged to communicate with the power receiver (105), using Near Field Communication, NFC.

7. A wireless power transfer system comprising the power transmitter (101) of any of the previous claims and further comprising the update device (800), the update device (800) comprising:
a first communication circuit (803) arranged to bidirectionally communicate data with the power transmitter (101) by modulation of the communication carrier;
an update controller (807) arranged to retrieve first update data linked with the first power receiver identity indication; and wherein the first communication circuit (803) is arranged to transmit the first update data to the power transmitter by modulation of the communication carrier.

8. The wireless power transfer system of claim 7 further comprising a store (809) arranged to store a set of at least one update data package each linked with a power receiver identity indication; and wherein the update processor (807) is arranged to retrieve the first update data from the store as an update data package linked with the first power receiver identity indication.

9. The wireless power transfer system of claim 7 further comprising a second communication circuit (813) arranged to communicate with a remote update server over a communication link not using the communication carrier; the second communication circuit (813) further being arranged to send a request for update data for the first power receiver identity indication to the remote update server and to receive the first update data from the remote update server.

10. The wireless power transfer system of claim 9 wherein the communication link includes at least one Internet communication link.

11. The wireless power transfer system of any of claims 7-10 wherein the update device (800) comprises a user interface (811) and the update processor (807) is arranged to transmit the first update data to the power transmitter (101) only if a confirmation user input is received by the user interface (811).

12. The wireless power transfer system of any of claims 7-11 further comprising the power receiver (105), the power receiver (105) comprising a communication circuit (609) arranged to bidirectionally communicate with the power transmitter (101) by modulation of the communication carrier; and
an update circuit (613) arranged to control the communication circuit (609) to transmit a power receiver identity indication for the power receiver (105) in response to a detection of the communication carrier; the update circuit (613) further being arranged to control the communication circuit (609) to receive the update data and to perform an update process using the update data.

13. The wireless power transfer system of any of claims 7-10 wherein the update device (800) comprises a user interface (811) and the update circuit (613) is arranged to transmit the power receiver identity indication conditionally on the user interface (811) receiving a confirmation user input.

14. A method of operation for a power transmitter (101) for wirelessly providing power to a power receiver (105) via an electromagnetic power transfer signal when in a power transfer phase; the power transmitter (101) comprising:
a transmitter coil (103) arranged to generate a power transfer signal in response to a drive signal;
a driver (301) arranged to generate a drive signal for the transmitter coil (103) to generate the electromagnetic power transfer signal when in the power transfer phase;
a communicator (307, 309) arranged to communicate with the power receiver (105), the communicator (307, 309) being arranged to perform bidirectional communication using a communication carrier, the communicator (307, 309) being arranged to transmit data by modulating the communication carrier and receiving data by demodulating a modulation of the communication carrier;
an object detector (311) arranged to perform object detection when the power transmitter (101) is in an idle phase;
and the method comprises the steps of:
receiving (701) a first power receiver identity indication modulate on communication carrier by a first power receiver in response to the object detector (311) detecting a presence of the first power receiver;
storing (703) the first power receiver identity indication;
transmitting (705) the first power receiver identity indication to an update device by modulation of the communication carrier in response to a detection by the object detector (311) that the first power receiver has been replaced by the update device;
receiving (707) update data modulated on the communication carrier by the update device;
storing (709) the update data and a link between the update data and the first power receiver identity;
receiving (711) a second power receiver identity indication modulated on the communication carrier by a second power receiver in response to a detection by the object detector (311) that the update device has been replaced by the second power receiver; and
retrieving (713) the update data and transmitting it to the second power receiver by modulation of the communication carrier in response to the first power receiver identity and the second power receiver identity meeting a match criterion.

15. A method of operation for a wireless power transfer system comprising the method of claim 14 and further comprising:
the update device bidirectionally communicating data with the power transmitter (101) by modulation of the communication carrier;
the update device retrieving first update data linked with the first power receiver identity indication; and
the update data transmitting the first update data to the power transmitter by modulation of the communication carrier.
